# EUROPÄISCHE PATENTANMELDUNG

(11) **EP 3 708 591 A1**
(43) Veröffentlichungstag der Anmeldung: **16.09.2020**
(21) Anmeldenummer: 19163043.3
(22) Anmeldetag: 15.03.2019
(51) Int. Cl.: C08F 4/00, C08F 222/10, C08F 2/38, C04B 24/00, C04B 24/42, C04B 26/06, C04B 26/14, C04B 26/16, C04B 26/18, C04B 26/32

(54) **BESCHLEUNIGER-KOMBINATION**

(71) Anmelder: Hilti Aktiengesellschaft, 9494 Schaan (LI)
(72) Erfinder: Gaefke, Gerald, 87600 Kaufbeuren (DE); Gnaß, Beate, 86368 Gersthofen (DE); Bürgel, Thomas, 86899 Landsberg (DE)
(74) Vertreter: Hilti Aktiengesellschaft Corporate Intellectual Property

(57) **Zusammenfassung**

Die vorliegende Erfindung betrifft ein Reaktivharz, enthaltend mindestens einen Beschleuniger mit hoher Reaktivität; und mindestens einen Beschleuniger mit niedriger Reaktivität, die Verwendung einer Kombination von mindestens einem Beschleuniger mit hoher Reaktivität und mindestens einem Beschleuniger mit niedriger Reaktivität in einem Reaktivharz-System, sowie eine Beschleuniger-Zusammensetzung für ein Reaktivharz-System umfassend mindestens einen Beschleuniger mit hoher Reaktivität; und mindestens einen Beschleuniger mit niedriger Reaktivität.

## Beschreibung

Die vorliegende Erfindung betrifft ein Reaktivharz, enthaltend mindestens einen Beschleuniger mit hoher Reaktivität und mindestens einen Beschleuniger mit niedriger Reaktivität; die Verwendung einer Kombination von mindestens einem Beschleuniger mit hoher Reaktivität und mindestens einem Beschleuniger mit niedriger Reaktivität in einem Reaktivharz-System; sowie eine Beschleuniger-Zusammensetzung für ein Reaktivharz-System umfassend mindestens einen Beschleuniger mit hoher Reaktivität und mindestens einen Beschleuniger mit niedriger Reaktivität.

### Hintergrund

Die Verwendung von chemischen Befestigungsmitteln auf Basis radikalisch härtbarer Harze ist seit langem bekannt. Im Bereich der Befestigungstechnik hat sich die Verwendung von Harzen als organisches Bindemittel für die chemische Befestigungstechnik, z.B. als Bestandteil einer Dübelmasse ("chemischer Dübel"), durchgesetzt. Es handelt sich bei solchen Dübelmassen um Verbundmassen, die als Mehrkomponenten-Systeme, üblicherweise Zweikomponenten-Systeme konfektioniert sind, wobei eine Komponente (die Reaktivharzkomponente) das radikalisch härtbare Harz und die andere Komponente (die Härterkomponente) einen Initiator (für die Radikalbildung) enthält. Andere, übliche Bestandteile, wie beispielsweise Additive, Füllstoffe, Beschleuniger, Inhibitoren, Lösungsmittel und Reaktivverdünner, können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet.

Als radikalisch härtbare Harze werden in konventionellen Reaktivharzkomponenten üblicherweise unter anderem Epoxy(meth)acrylatharze eingesetzt, die durch Reaktion von Epoxid, z.B. Bisphenol-A-Diglycidylether (BADGE), mit α,β-ungesättigter Carbonsäure, z.B. Methacrylsäure, erhältlich sind. Epoxy(meth)acrylatharze werden üblicherweise mit Strahlen oder radikalisch gehärtet. Als Radikalquelle für die radikalische Härtung werden typischerweise Peroxide, wie Diacetylperoxid, Hydroperoxide oder Peroxyester zugesetzt. Aufgrund guter Lagerfähigkeit werden stabile Peroxide bevorzugt, die jedoch erst bei erhöhten Temperaturen Radikale durch thermische Zersetzung bilden. Um eine Härtung bei Raumtemperatur zu ermöglichen ist es notwendig, den Peroxidzerfall und die Radikalbildung über Additivierung zu beschleunigen, also einen sogenannten Beschleuniger zuzugeben. Mit solchen Beschleunigern lässt sich somit die Verarbeitungszeit von Reaktivharz-Systemen einstellen.

Als derartige Beschleuniger werden üblicherweise Salze oder Komplexe von Übergangsmetallen (Cu, V, Co, Mn, Fe, etc.) oder tertiäre aromatische Amine als Additive in den Harzen eingesetzt.

Lange Verarbeitungszeiten gehen jedoch in der Regel zu Lasten der Performance (z. B. Lastwerte und Verbundspannung). Bisher bekannte Reaktivharz-Systeme mit langen Verarbeitungszeiten haben den Nachteil, dass durch die Verzögerung die Aushärtung negativ beeinflusst wird.

Es besteht daher Bedarf eine für radikalisch härtbare Systeme lange Verarbeitungszeit einzustellen ohne die verzögerte Aushärtung negativ zu beeinträchtigen.

### Beschreibung der Erfindung

Diese Aufgabe wird durch die hier beschriebenen Harze und die darin verwendeten Beschleuniger mit unterschiedlicher Reaktivität gelöst.

Insbesondere zeichnet sich ein erfindungsgemäßes Reaktivharz dadurch aus, dass es mindestens einen Beschleuniger mit hoher Reaktivität und mindestens einen Beschleuniger mit niedriger Reaktivität enthält, wobei das molare Verhältnis des mindestens einen Beschleunigers mit hoher Reaktivität zu dem mindestens einen Beschleuniger mit niedriger Reaktivität von 1,0:1,0 bis 1,0:1,6 beträgt.

Ein Beschleuniger mit hoher Reaktivität ist dadurch gekennzeichnet, dass ein Reaktivharz eine Gelzeit gemäß Testbeispiel 1 von 2 Minuten bis 40 Minuten aufweist, wenn es als einzigen Beschleuniger den Beschleuniger mit hoher Reaktivität enthält. Ein Beschleuniger mit niedriger Reaktivität ist dadurch gekennzeichnet, dass ein Reaktivharz eine Gelzeit gemäß Testbeispiel 1 von 40 Minuten bis 200 Minuten aufweist, wenn es als einzigen Beschleuniger den Beschleuniger mit niedriger Reaktivität enthält.

Beispielsweise können Beschleuniger, die in der vorliegenden Erfindung verwendet werden können, durch Umsetzung eines primären oder sekundären aromatischen Amins mit einem Diglycidylether erhalten werden. Ein so erhältlicher Beschleuniger, wie er in der vorliegenden Erfindung verwendet werden kann, ist das nachfolgend abgebildete Di-*iso*-propanol-*p*-toluidin (DiPpT):

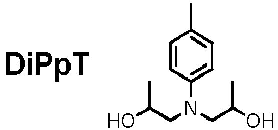

Des Weiteren können Beschleuniger, die in der vorliegenden Erfindung verwendet werden können, beispielsweise durch Umsetzung eines primären oder sekundären aromatischen Amins mit einem Diglycidylether und einer α,β-ungesättigten Carbonsäure erhalten werden. In dieser Synthese wird (1) ein aromatisches primäres oder sekundäres Amin umgesetzt mit (2) einem Diglycidylether und (3) einer α,β-ungesättigten Carbonsäure. Die Reaktion erfolgt typischerweise in Gegenwart von (4) einem Katalysator. Optional kann (5) ein Inhibitor im Reaktionsgemisch vorhanden sein. Eine exemplarische Synthese mit einem primären aromatischen Amin (hier: para-Toluidin) erfolgt wie folgt:

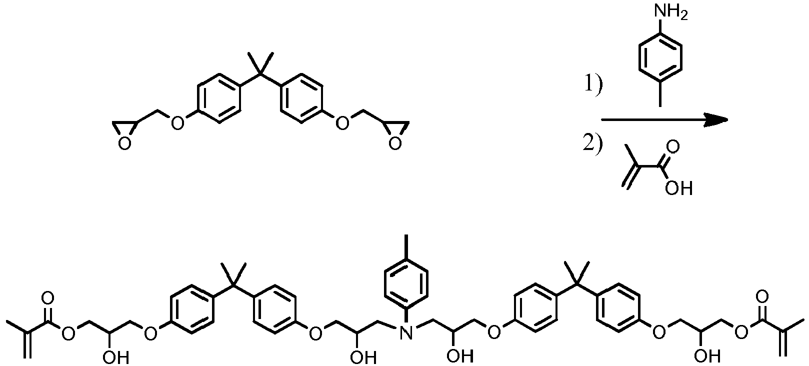

### 1. Herstellung Backbone-Harz/Reaktivharz-Masterbatch

Ein Digylcidylether, beispielsweise Bisphenol-A-diglycidylether, und eine α,β-ungesättigte Carbonsäure, beispielsweise Methacrylsäure, werden in Anwesenheit eines Katalysators und eines Inhibitors (dient dazu, das durch die Polymerisation gebildete Backbone-Harz zu stabilisieren) zur Reaktion gebracht. Hierbei entsteht das Backbone-Harz.

Das nach Ende der Reaktion erhaltene Reaktionsgemisch wird als Reaktivharz-Masterbatch bezeichnet. Dieses wird nicht weiter aufgearbeitet, d.h. das Backbone-Harz wird nicht isoliert.

### 2. Herstellung Reaktivharz

Das Backbone-Harz bzw. Reaktivharz-Masterbatch, beispielsweise das Reaktionsgemisch aus der unter 1. beschriebenen Herstellung Backbone-Harz/Reaktivharz-Masterbatch wird versetzt mit mindestens einem Beschleuniger mit hoher Reaktivität, mindestens einem Beschleuniger mit niedriger Reaktivität, ein oder mehreren Reaktivverdünnern und ein oder mehreren Inhibitoren.

Die Reihenfolge, in welcher die einzelnen Komponenten des Reaktivharzes miteinander vermischt werden, ist nicht relevant. Typischerweise werden der mindestens eine Beschleuniger mit hoher Reaktivität und der mindestens eine Beschleuniger mit niedriger Reaktivität vorgelegt, und dann werden nacheinander der Reaktivharz-Masterbatch, der Reaktivverdünner, und der Inhibitor zugesetzt.

Ein erster Gegenstand der Erfindung ist ein Reaktivharz, enthaltend mindestens einen Beschleuniger mit hoher Reaktivität und mindestens einen Beschleuniger mit niedriger Reaktivität, wobei das molare Verhältnis des mindestens einen Beschleunigers mit hoher Reaktivität zu dem mindestens einen Beschleunigers mit niedriger Reaktivität von 1,0:1,0 bis 1,0:1,6 beträgt.

Ein zweiter Gegenstand der Erfindung ist eine Reaktivharzkomponente (A), die ein erfindungsgemäßes Reaktivharz enthält.

Ein dritter Gegenstand der Erfindung ist ein Reaktivharz-System mit einer erfindungsgemäßen Reaktivharzkomponente (A) und einer Härterkomponente (B), die einen Initiator (wie etwa ein Peroxid) für die Härtung des Reaktivharzes enthält. Die Komponenten (A) und (B) sind bis zur Verwendung des Reaktivharz-Systems räumlich getrennt voneinander verpackt, damit erst eine Reaktion stattfindet, wenn die beiden Komponenten miteinander in Kontakt gebracht werden.

Ein vierter Gegenstand der Erfindung ist die Verwendung eines erfindungsgemäßen Reaktivharzes und/oder eines erfindungsgemäßen Reaktivharz-Systems zur chemischen Befestigung von Verankerungsmitteln in Bohrlöchern oder zum baulichen Kleben.

Ein fünfter Gegenstand der Erfindung ist die Verwendung einer Kombination von mindestens einem Beschleuniger mit hoher Reaktivität und mindestens einem Beschleuniger mit niedriger Reaktivität in einem Reaktivharz-System zum Einstellen der Verarbeitungszeit.

Ein sechster Gegenstand der Erfindung ist die Verwendung von mindestens einem Beschleuniger mit hoher Reaktivität in einem Reaktivharz-System enthaltend mindestens einen Beschleuniger mit niedriger Reaktivität zum Einstellen der Verarbeitungszeit.

Ein siebter Gegenstand der Erfindung ist die Verwendung von mindestens einem Beschleuniger mit niedriger Reaktivität in einem Reaktivharz-System enthaltend mindestens einen Beschleuniger mit hoher Reaktivität zum Einstellen der Verarbeitungszeit.

Ein achter Gegenstand der Erfindung ist eine Beschleuniger-Zusammensetzung für ein Reaktivharz-System umfassend mindestens einen Beschleuniger mit hoher Reaktivität und mindestens einen Beschleuniger mit niedriger Reaktivität, wobei das molare Verhältnis des mindestens einen Beschleunigers mit hoher Reaktivität zu dem mindestens einen Beschleunigers mit niedriger Reaktivität von 1,0:1,0 bis 1,0:1,6 beträgt.

Im Sinne der Erfindung bedeuten die verwendeten Begriffe:
- *"Backbone-Harz"* ein üblicherweise festes oder hochviskoses radikalisch polymerisierbares Harz, welches durch Polymerisation (z.B. nach Zugabe eines Initiators in Gegenwart eines Beschleunigers - welcher erfindungsgemäß eine Beschleuniger-Kombination ist) härtet;
- *"Reaktivharz-Masterbatch"* das Reaktionsprodukt der Reaktion zur Herstellung des Backbone-Harzes, also eine Mischung aus Backbone-Harz, Inhibitor und weiteren Bestandteilen (z.B. Katalysator) der Reaktionsmischung;
- *"Reaktivharz"* eine Mischung aus Reaktivharz-Masterbatch, einem oder mehreren Inhibitoren, einem Reaktivverdünner und gegebenenfalls weiteren Additiven; das Reaktivharz ist typischerweise flüssig oder viskos und kann zu einer Reaktivharzkomponente weiterverarbeitet werden; hierin wird das Reaktivharz auch als *"Harzmischung"* bezeichnet;
- *"Inhibitor"* einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als *"Stabilisator"* bezeichnet) bzw. der eine radikalische Polymerisation eines Harzes nach Zugabe eines Initiators (üblicherweise in Verbindung mit einem Beschleuniger) zeitlich verzögert (diese Stoffe werden in Fachkreisen auch als *"Inhibitor"* bezeichnet - die jeweilige Bedeutung des Begriffes erschließt sich aus dem Kontext);
- *"Initiator"* einen Stoff, der (üblicherweise in Kombination mit einem Beschleuniger) reaktionsinitiierende Radikale bildet;
- *"Beschleuniger"* ein Reagenz, welches mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;
- *"Reaktivverdünner"* flüssige oder niedrigviskose Monomere und Backbone-Harze, welche andere Backbone-Harze oder den Reaktivharz-Masterbatch verdünnen und dadurch die zu deren Applikation notwendige Viskosität verleihen, zur Reaktion mit dem Backbone-Harz befähigte funktionelle Gruppen enthalten und bei der Polymerisation (Härtung) zum überwiegenden Teil Bestandteil der gehärteten Masse (z.B. des Mörtels) werden; Reaktivverdünner werden auch co-polymerisierbares Monomer genannt;
- *"Gelzeit",* t_{g25°C}, die Zeit (t) der Härtungsphase eines wie hierin definierten Reaktivharzes (t_{hg25°C}) oder einer wie hierin definierten Reaktivharzkomponente (t_{mg25°C}), in der sich die Temperatur von einer Starttemperatur von 25°C bei einer Gelzeitmessung auf beispielsweise 50°C erhöht; ein Verfahren zur Bestimmung der Gelzeit ist in den Beispielen beschrieben;
- *"Mörtelreaktivität" t_{m,25→50°C},* (hier auch als *"Reaktivitätsdauer"* bezeichnet) die Zeitspanne gemessen vom Zeitpunkt der Zugabe eines Initiators zur Initialisierung der Härtung an bis zu dem Zeitpunkt, bei dem die Zusammensetzung eine Temperatur von 50°C erreicht hat.
- *"maximale Reaktivitätstemperatur Tₘₐₓ"* diejenige Temperatur, bei welcher der Temperaturverlauf bei einer Reaktivitätsmessung (z.B. der in den Beispielen beschriebenen Gelzeitmessung) ein Maximum durchläuft;
- *"Abschluss der Reaktion"* bzw. *"Reaktionsende"* oder *"Reaktionsabschluss"* den Zeitpunkt, zu dem eine Reaktion vollständig abgelaufen ist; erkennbar ist dies bei einer chemischen Reaktion wie z.B. der Reaktion zur Herstellung des Backbone-Harzes in der Regel daran, dass die mit der Reaktion verbundene Exothermie endet;
- *"Reaktivharzkomponente"* eine flüssige oder viskose Mischung aus Reaktivharz und Füllstoffen und optional weiteren Komponenten, z.B. Füllstoffen, Additiven; typischerweise ist die Reaktivharzkomponente eine der beiden Komponenten eines Zweikomponenten-Reaktivharz-Systems zur chemischen Befestigung;
- *"Härterkomponente"* eine Zusammensetzung, die einen Initiator für die Polymerisation eines Backbone-Harzes enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;
- *"Zweikomponenten-System"* bzw. *"Zweikomponenten-Reaktivharz-System"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Backbone-Harzes erst nach dem Mischen der beiden Komponenten erfolgt;
- *"Mehrkomponenten-System"* bzw. *"Mehrkomponenten-Reaktivharz-System"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Backbone-Harzes erst nach dem Mischen aller Komponenten erfolgt;
- *"(Meth)acryl ...*/*... (meth)acryl...",* dass sowohl die "Methacryl.../...methacryl..."- als auch die "Acryl.../...acryl..."-Verbindungen gemeint sein sollen; bevorzugt sind in der vorliegenden Erfindung "Methacryl.../...methacryl..."-Verbindungen gemeint;
- *"Epoxy(meth)acrylat"* ein Epoxidharz, das Acrylat- oder Methacrylatgruppen aufweist und im wesentlichen Epoxygruppen-frei ist;
- *"Alkyl"* einen gesättigten Kohlenwasserstoffrest, der verzweigt oder unverzweigt sein kann; bevorzugt ein C₁-C₂₀-Alkyl, besonders bevorzugt ein C₁-C₄-Alkyl, also ein Alkyl ausgewählt aus der Gruppe bestehend aus Methyl, Ethyl, n-Propyl, iso-Propyl, n-Butyl, iso-Butyl, und tert-Butyl; Methyl, Ethyl und tert-Butyl sind besonders bevorzugt, und ganz besonders bevorzugt ist Methyl;
- *"Hydroxyalkyl"* ein Alkyl, das mindestens eine Hydroxylgruppe als Substituenten trägt;
- *"Alkenyl"* einen ungesättigten Kohlenwasserstoffrest mit mindestens einer Doppelbindung, der verzweigt oder unverzweigt sein kann; bevorzugt ein C₂-C₂₀-Alkenyl, besonders bevorzugt ein C₂-C₆-Alkenyl, also ein Alkenyl ausgewählt aus der Gruppe bestehend aus Ethenyl, Propenyl, Butenyl, Pentenyl und Hexenyl; Ethenyl, Propenyl und Butenyl sind besonders bevorzugt, und ganz besonders bevorzugt ist Ethenyl;
- *"Hydroxy-Alkenyl"* ein Alkenyl, das mindestens eine Hydroxylgruppe als Substituenten trägt;
- *"Alkinyl"* einen ungesättigten Kohlenwasserstoffrest mit mindestens einer Dreifachbindung, der verzweigt oder unverzweigt sein kann; bevorzugt ein C₂-C₂₀-Alkinyl, besonders bevorzugt ein C₂-C₆-Alkinyl, also ein Alkinyl ausgewählt aus der Gruppe bestehend aus Ethinyl, Propinyl, Butinyl, Pentinyl und Hexinyl; Ethinyl, Propinyl und Butinyl sind besonders bevorzugt, und ganz besonders bevorzugt ist Ethinyl;
- *"Hydroxy-Alkinyl"* ein Alkinyl, das mindestens eine Hydroxylgruppe als Substituenten trägt;
- *"kalthärtend"* dass eine Harzmischung oder ein Reaktivharz-System bei Raumtemperatur vollständig aushärten kann;
- *"ein", "eine", "einer"* als Artikel vor einer chemischen Verbindungsklasse, z.B. vor dem Wort "Epoxymethacrylat", dass eine oder mehrere unter diese chemische Verbindungsklasse fallende Verbindungen, z.B. verschiedene Epoxymethacrylate, gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus";*
- *"etwa"* oder *"circa"* oder "ca." vor einem Zahlenwert einen Bereich von ± 5% dieses Wertes, bevorzugt ± 2% dieses Wertes, bevorzugter ± 1% dieses Wertes, besonders bevorzugt ± 0% dieses Wertes (also genau diesen Wert);
- ein durch Zahlen begrenzter Bereich, z.B. *"von 80°C bis 120°C",* dass die beiden Eckwerte und jeder Wert innerhalb dieses Bereichs einzeln offenbart sind.

Alle in diesem Text genannten Normen (z.B. DIN-Normen) wurden in der zum Anmeldetag dieser Anmeldung aktuellen Ausgabe verwendet.

Gemäß der vorliegenden Erfindung ist ein Beschleuniger mit hoher Reaktivität dadurch gekennzeichnet, dass ein Reaktivharz eine Gelzeit gemäß Testbeispiel 1 von 2 Minuten bis 40 Minuten aufweist, wenn es als einzigen Beschleuniger den Beschleuniger mit hoher Reaktivität enthält.

Gemäß der vorliegenden Erfindung ist ein Beschleuniger mit niedriger Reaktivität dadurch gekennzeichnet, dass ein Reaktivharz eine Gelzeit gemäß Testbeispiel 1 von 40 Minuten bis 200 Minuten aufweist, wenn es als einzigen Beschleuniger den Beschleuniger mit niedriger Reaktivität enthält.

Das molare Verhältnis des mindestens einen Beschleunigers mit hoher Reaktivität zu dem mindestens einen Beschleunigers mit niedriger Reaktivität beträgt von 1,0:1,0 bis 1,0:1,6.

In einer bevorzugten Ausführungsform beträgt das molare Verhältnis des mindestens einen Beschleunigers mit hoher Reaktivität zu dem mindestens einen Beschleunigers mit niedriger Reaktivität von 1,0:1,1 bis 1,0:1,6.

In einer Ausführungsform kann der mindestens eine Beschleuniger mit hoher Reaktivität kovalent in das Harz eingebaut sein.

In einer weiteren Ausführungsform kann der mindestens eine Beschleuniger mit niedriger Reaktivität kovalent in das Harz eingebaut sein.

Weiterhin können sowohl der mindestens eine Beschleuniger mit hoher Reaktivität als auch der mindestens eine Beschleuniger mit niedriger Reaktivität kovalent in das Harz eingebaut sein.

Die in den Beispielen beschriebenen Beschleuniger und Beschleuniger-Kombinationen charakterisieren eine bevorzugte Ausführungsform der Erfindung.

Durch die Kombination von mindestens einem Beschleuniger mit hoher Reaktivität und mindestens einem Beschleuniger mit niedriger Reaktivität ist es möglich, die Verarbeitungszeit einzustellen, ohne negative Auswirkungen auf die Performance, beispielsweise Lastwerte wie die Verbundspannung, hervorzurufen. Insbesondere ist es durch die Kombination von mindestens einem Beschleuniger mit hoher Reaktivität und mindestens einem Beschleuniger mit niedriger Reaktivität möglich, möglichst lange Verarbeitungszeiten zu erzielen ohne Verschlechterung der Performance.

Geeignete Beschleuniger mit hoher Reaktivität und geeignete Beschleuniger mit niedriger Reaktivität sind unter anderem Amine und/oder Metallsalze, wie aromatische Amine, beispielsweise Toluidine wie Di-*iso*-propanol-*p*-toluidin (DiPpT), Di-hydroxyethylm-toluidin (DHEmT) und Diethyl-p-Toluidin (DEpT). Ob ein Amine oder Metallsalz ein Beschleuniger mit hoher Reaktivität oder ein Beschleuniger mit niedriger Reaktivität ist bestimmt sich alleinig durch, dass ein Reaktivharz eine Gelzeit gemäß Testbeispiel 1 von 2 Minuten bis 40 Minuten aufweist, wenn es als einzigen Beschleuniger den Beschleuniger mit hoher Reaktivität enthält beziehungsweise eine Gelzeit gemäß Testbeispiel 1 von 40 Minuten bis 200 Minuten aufweist, wenn es als einzigen Beschleuniger den Beschleuniger mit niedriger Reaktivität enthält.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, *n*-Propylamin, Di-*n*-propylamin, Tri-*n*-propylamin, *Iso*-propylamin, Di-*iso*-propylamin, Tri-*iso*-propylamin, *n*-Butylamin, *Iso*-butylamin, *tert-*Butylamin, Di-*n*-butylamin, Di-*iso*-butylamin, Tri-*iso*-butylamin, *n*-Pentylamin, *Iso-*pentylamin, Di-*iso*-pentylamin, Hexylamine, Octylamine, Dodecylamine, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, *N,N*'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1 -diethylaminopentan, 2,5-Diamino-2,5-dimethylhexan, Trimethylhexamethylendiamin, *N,N*-Dimethylaminoethanol, 2-(2-Diethylaminoethoxy)ethanol, Bis-(2-hydroxyethyl)-oleylamin, Tris[2-(2-hydroxyethoxy)ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis(2-hydroxypropyl)amin, Tris(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, *N*-Methylcyclohexylamin, *N,N*-Dimethylcyclohexylamin, Dicyclohexylamin, *N*-Ethylcyclohexylamin, *N*-(2-Hydroxyethyl)cyclohexylamin, *N,N-*Bis(2-hydroxyethyl)cyclohexylamin, *N*-(3-Aminopropyl)cyclohexylamin, Aminomethylcyclohexan, Hexahydrotoluidin, Hexahydrobenzylamin, Anilin, *N-*Methylanilin, *N,N*-Dimethylanilin, *N,N*-Diethylanilin, *N,N*-Dipropylanilin, *iso*-Butylanilin, Toluidine, Diphenylamin, Hydroxyethylanilin, Bis(hydroxyethyl)anilin, Chloranilin, Aminophenole, Aminobenzoesäuren und deren Ester, Benzylamin, Dibenzylamin, Tribenzylamin, Methyldibenzylamin, β-Phenylethylamin, Xylidin, Di-iso-propylanilin, Dodecylanilin, Aminonaphthalin, *N*-Methylaminonaphthalin, *N,N-*Dimethylaminonaphthalin, *N,N*-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Toluidine, Benzidine, 2,2-Bis(aminophenyl)propan, Aminoanisole, Aminothiophenole, Aminodiphenylether, Aminocresole, Morpholin, *N*-Methylmorpholin, *N*-Phenylmorpholin, Hydroxyethylmorpholin, *N*-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-*p*-toluidin.

Geeignete Metallsalze sind zum Beispiel Cobaltoctoat oder Cobaltnaphthenoat sowie Vanadium-, Kalium-, Kalzium-, Kupfer-, Eisen-, Mangan- oder Zirkoniumcarboxylate. Geeignete Anilin- und Toluidin-Derivate sowie *N,N*-Bisalkylarylamine sind *N,N-*Dimethylanilin, *N,N*-Diethylanilin, *N,N*-Dimethyl-*p*-toluidin, *N,N-*Bis(hydroxyalkyl)arylamine, *N,N*-Bis(2-hydroxyethyl)aniline, *N,N*-Bis(2-hydroxyethyl)toluidin, *N*,*N*-Bis(2-hydroxypropyl)anilin, *N*,*N*-Bis(2-hydroxypropyl)toluidin, *N,N*-Bis(3-methacryloyl-2-hydroxypropyl)-*p*-toluidin, *N*,*N*-Dibutoxyhydroxypropyl-p-toluidin und 4,4'-Bis(dimethylamino)diphenylmethan.

Bevorzugte Beschleuniger der vorliegenden Erfindung sind

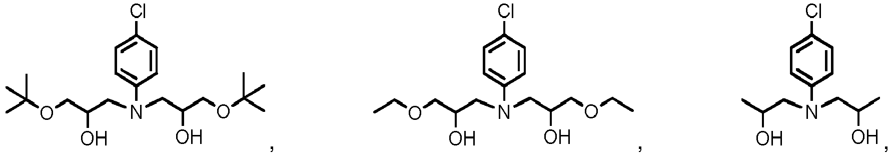

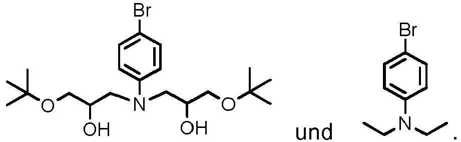

Als Backbone-Harze sind erfindungsgemäß ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die in der erfindungsgemäßen Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diese Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion eines Diacids, z.B. Maleinsäure, mit Dicyclopentadien, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt.

In diesem Zusammenhang wird auf die Anmeldung US 2011/071234 verwiesen, deren Inhalt hiermit in diese Anmeldung aufgenommen wird.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

Ganz besonders geeignet sind die bekannten Reaktionsprodukte aus Di- oder Polyisocyanaten und Hydroxyalkylmethylacrylaten, wie sie beispielsweise in der DE 2 312 559 A1 beschrieben sind, Addukte aus (Di)lsocyanaten und 2,2-Propanbis-[3-(4-phenoxy)-1,2-hydroxypropan-1-methacrylat] nach der US-PS 3 629 187 sowie die Addukte aus Isocyanaten und Methacryloylalkylethern, -alkoxybenzolen bzw. -alkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen. Selbstverständlich können auch Gemische aus geeigneten Monomeren verwendet werden.

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

Der prozentuale Anteil (in Gew.-% des Reaktivharzes) von Backbone-Harz in dem erfindungsgemäßen Reaktivharz beträgt vorteilhafterweise mehr als etwa 5%, bevorzugt mehr als etwa 15%, und besonders bevorzugt mehr als etwa 20%. Der prozentuale Anteil (in Gew.-% des Reaktivharzes) von Backbone-Harz in dem Reaktivharz beträgt vorteilhafterweise von etwa 5% bis etwa 90%, bevorzugt von etwa 8% bis etwa 80%, bevorzugter von etwa 10% bis etwa 60%, bevorzugter von etwa 20% bis etwa 55%, noch bevorzugter von etwa 25% bis etwa 55%, besonders bevorzugt von etwa 25% bis etwa 50% und ganz besonders bevorzugt von etwa 28% bis etwa 45%.

Der Anteil (in mmol Amin pro 100 g des Reaktivharzes) des mindestens einen Beschleunigers mit hoher Reaktivität und des mindestens einen Beschleunigers mit niedriger Reaktivität im erfindungsgemäßen Reaktivharz beträgt von 0,5 bis 50, bevorzugt von 1 bis 20, besonders bevorzugt von 5 bis 15 mmol Amin/100g Reaktivharz.

Sowohl zur Stabilisierung des Reaktivharzes oder der das Reaktivharz enthaltenden Reaktivharzkomponente (A) oder anderer das Reaktivharz enthaltender Zusammensetzungen als auch zur Einstellung der Harzreaktivität sind im erfindungsgemäßen Reaktivharz ein oder mehrere Inhibitoren vorhanden.

Hierfür sind die für radikalisch polymerisierbare Verbindungen üblicherweise verwendeten Inhibitoren geeignet, wie sie dem Fachmann bekannt sind. Bevorzugt sind diese Inhibitoren unter phenolischen Inhibitoren und nicht-phenolischen Inhibitoren, insbesondere Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Catechole, wie Brenzkatechin, und Catecholderivate, wie Butylbrenzkatechine, wie 4-tert-Butylbrenzkatechin und 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet. Diese Inhibitoren sind oft Bestandteil von kommerziellen radikalisch härtenden Reaktivharzkomponenten.

Als nicht-phenolische Inhibitoren kommen vorzugsweise Phenothiazine, wie Phenothiazin und/oder Derivate oder Kombinationen davon, oder stabile organische Radikale, wie etwa Galvinoxyl- und *N*-Oxyl-Radikale, insbesondere vom Piperidinyl-*N-*oxyl- oder Tetrahydropyrrol-*N*-oxyl-Typ, in Betracht, wie Aluminium-*N-*nitrosophenylhydroxylamin, Diethylhydroxylamin, Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, TEMPOL, TEMPO und dergleichen.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Als stabile *N*-Oxyl-Radikale können beispielsweise solche verwendet werden, wie sie in der DE 199 56 509 A1 und der DE 195 31 649 A1 beschrieben sind. Derartige stabile Nitroxylradikale sind vom Typ Piperidinyl-*N*-oxyl oder Tetrahydropyrrol-*N*-oxyl oder eine Mischung daraus.

Bevorzugte stabile Nitroxylradikale sind ausgewählt aus der Gruppe bestehend aus 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet) und Mischungen aus zwei oder mehreren dieser Verbindungen, wobei 1-Oxyl-2,2,6,6-tetramethylpiperidin-4-ol (TEMPOL) besonders bevorzugt ist.

Bevorzugt sind der oder die Inhibitoren ausgewählt aus der Gruppe bestehend aus *N-*Oxyl-Radikalen, Catecholen, Catecholderivaten und Phenothiazinen und ein Gemisch von zwei ider mehreren davon. Besonders bevorzugt sind der oder die Inhibitoren ausgewählt aus der Gruppe bestehend aus Tempol, Catecholen und Phenothiazinen. Ganz besonders bevorzugt sind die in den Beispielen verwendeten Inhibitoren, bevorzugt etwa in den in den Beispielen angegebenen Mengen.

Die Inhibitoren können, abhängig von den gewünschten Eigenschaften des Reaktivharzes, entweder alleine oder als Kombination von zweien oder mehreren davon verwendet werden. Die Kombination von phenolischen und nicht-phenolischen Inhibitoren ist bevorzugt.

Der Inhibitor oder die Inhibitormischung wird zugesetzt in der Fachwelt bekannten üblichen Mengen, bevorzugt in einer Menge von etwa 0,0005 bis etwa 2 Gew.-% (bezogen auf das - letztendlich damit hergestellte - Reaktivharz), stärker bevorzugt von etwa 0,01 bis etwa 1 Gew.-% (bezogen auf das Reaktivharz), noch stärker bevorzugt von etwa 0,05 bis etwa 1 Gew.-% (bezogen auf das Reaktivharz).

Das erfindungsgemäße Reaktivharz enthält mindestens einen Reaktivverdünner.

Geeignete Reaktivverdünner sind niederviskose, radikalisch co-polymerisierbare Verbindungen, bevorzugt kennzeichnungsfreie Verbindungen.

Geeignete Reaktivverdünner sind in den Anmeldungen EP 1 935 860 A1 und DE 195 31 649 A1 beschrieben. Vorzugsweise enthält das Reaktivharz als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: 2-, 3-Hydroxypropyl(meth)acrylat (HP(M)A), 1,2-Ethandioldi(meth)acrylat, 1,3-Propandioldi(meth)acrylat, 1,3-Butandioldi(meth)acrylat, 1,4-Butandioldi(meth)acrylat, TrimethyIoIpropantri(meth)acrylat, Phenethyl(meth)acrylat, Tetrahydrofurfuryl(meth)acrylat, Ethyltriglykol(meth)acrylat, *N,N-*Dimethylaminoethyl(meth)acrylat, *N*,*N*-Dimethylaminomethyl(meth)acrylat, Acetoacetoxyethyl(meth)acrylat, lsobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyltricylo-5.2.1 0.^{2.6}-decan, 3-(Meth)cyclopentadienyl(meth)acrylat, und Decalyl-2-(meth)acrylat; PEG-di(meth)acrylate, wie PEG200-di(meth)acrylat, Tetraehtylenglykoldi(meth)acrylat, Solketal(meth)acrylat, Cyclohexyl(meth)acrylat, Phenoxyethyldi(meth)acrylat, Methoxyethyl(meth)acrylat, tert-Butyl(meth)acrylat und Norbornyl(meth)acrylat. Methacrylate sind gegenüber Acrylaten bevorzugt. Besonders bevorzugt sind 2- und 3-Hydroxypropylmethacrylat (HPMA), 1,2-Ethandioldimethacrylat, 1,4-Butandioldimethacrylat (BDDMA), 1,3-Butandioldimethacrylat, Trimethylolpropantrimethacrylat, Acetoacetoxyethylmethacrylat, Isobornylmethacrylat, Bisphenol-A-methacrylat, Trimethylcyclohexylmethacrylat, 2-Hydroxyethylmethacrylat, PEG200-dimethacrylat und Norbornylmethacrylat. Ganz besonders bevorzugt sind 1,4-Butandioldimethacrylat und ein Gemisch aus 2- und 3-Hydroxypropylmethacrylat (HPMA), oder eine Mischung aus diesen drei Methacrylaten. Am bevorzugtesten ist ein Gemisch aus 2- und 3-Hydroxypropylmethacrylat (HPMA). Grundsätzlich können auch andere übliche radikalisch polymerisierbare Verbindungen, allein oder im Gemisch mit den (Meth)acrylsäureestern, als Reaktivverdünner eingesetzt werden, z. B. Styrol, α-Methylstyrol, alkylierte Styrole, wie *tert*-Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglycoldivinylether, 1,4-Butandioldivinylether, Trimethylolpropandivinylether, Trimethylolpropantrivinylether, Mono-, Di-, Tri-, Tetra- und Polyalkylenglycolvinylether, Mono-, Di-, Tri-, Tetra- und Polyalkylenglycolallylether, Adipinsäuredivinylester, Trimethylolpropandiallylether und Trimethylolpropantriallylether.

Bevorzugte Reaktivverdünner sind die in den Beispielen verwendeten Reaktivverdünner, bevorzugt etwa in den in den Beispielen angegebenen Mengen.

Der bzw. die Reaktivverdünner wird bzw. sind bevorzugt in einer Menge von 0 bis etwa 80 Gew.-%, besonders bevorzugt von etwa 10 bis etwa 60 Gew.-%, noch bevorzugter von etwa 20 bis etwa 50 Gew.-%, bezogen auf das Reaktivharz, im erfindungsgemäßen Reaktivharz vorhanden.

Zweckmäßig wird die Härtung des Reaktivharzes mit einem Peroxid als Initiator initiiert. Alle dem Fachmann bekannten Peroxide, die zum Härten von Epoxid(meth)acrylatharzen verwendet werden, können eingesetzt werden. Derartige Peroxide umfassen organische und anorganische Peroxide, entweder flüssig oder fest, wobei auch Wasserstoffperoxid verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-), Hydroperoxide (der Formel -OOH) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketonperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. In einer bevorzugten Ausführungsform wird zum Härten Benzoylperoxid (BPO) oder tert-Butylperoxybenzoat verwendet.

Das Peroxid kann in seiner Reinform oder als Bestandteil einer Mischung verwendet werden. Typischerweise wird es als Bestandteil einer Mischung verwendet, insbesondere als Bestandteil einer Härterkomponente (B) eines Reaktivharz-Systems. Die in den Beispielen verwendete Härterkomponente bzw. eine Härterkomponenten mit denselben Bestandteilen ist besonders bevorzugt.

Gegenstand der vorliegenden Erfindung ist auch ein Reaktivharz-System, bestehend aus einer Reaktivharzkomponente (A) und einer Härterkomponente (B). Die Reaktivharzkomponente (A) alleine ist ebenfalls Gegenstand der vorliegenden Erfindung. Besagte Reaktivharzkomponente (A) enthält das erfindungsgemäße Reaktivharz.

Die erfindungsgemäße Reaktivharzkomponente (A) kann neben dem erfindungsgemäßen Reaktivharz Füllstoffe und/oder Additive enthalten. Es sei darauf hingewiesen, dass einige Stoffe sowohl als Füllstoff und, ggf. in modifizierter Form, auch als Additiv verwendet werden können. Beispielsweise dient pyrogene Kieselsäure in ihrer polaren, nicht nachbehandelten Form eher als Füllstoff und in ihrer apolaren, nachbehandelten Form eher als Additiv. In Fällen, in denen genau derselbe Stoff als Füllstoff oder Additiv verwendet werden kann, soll seine Gesamtmenge die hierin festgelegte Obergrenze für Füllstoffe vorteilhafterweise nicht überschreiten.

Zur Herstellung einer Reaktivharzkomponente für bauliche Anwendungen, inbesondere für die chemische Befestigung, können dem erfindungsgemäßen Reaktivharz übliche Füllstoffe zugegeben werden. Diese Füllstoffe sind typischerweise anorganische Füllstoffe, wie beispielsweise weiter unten beschrieben.

Der Anteil des erfindungsgemäßen Reaktivharzes in der Reaktivharzkomponente beträgt bevorzugt von etwa 10 bis etwa 70 Gew.-%, stärker bevorzugt von etwa 30 bis etwa 60 Gew.-%, noch stärker bevorzugt von etwa 35 bis etwa 50 Gew.-%, bezogen auf die Reaktivharzkomponente. Dementsprechend beträgt der Anteil der gesamten Füllstoffe und Additive bevorzugt von etwa 90 bis etwa 30 Gew.-%, stärker bevorzugt von etwa 70 bis etwa 40 Gew.-%, noch stärker bevorzugt von etwa 75 bis etwa 50 Gew.-%, bezogen auf die Reaktivharzkomponente.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure, insbesondere polare, nicht nachbehandelte pyrogene Kieselsäure), Silikate, Aluminiumoxide (z.B. Tonerde), Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Aluminatzement (oft auch als Tonerdezement bezeichnet) oder Portlandzement), Metalle, wie Aluminium, Ruß, ferner Holz, mineralische oder organische Fasern, oder dergleichen, oder Gemische von zwei oder mehr davon Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von etwa 10 mm und einen Minimaldurchmesser von etwa 1 nm. Das heißt, der Durchmesser ist etwa 10 mm oder irgendein Wert von weniger als etwa 10 mm, aber mehr als etwa 1 nm. Bevorzugt ist der maximale Durchmesser ein Durchmesser von etwa 5 mm, bevorzugter von etwa 3 mm, noch bevorzugter von etwa 0,7 mm. Ganz besonders bevorzugt ist ein maximaler Durchmesser von etwa 0,5 mm. Der bevorzugtere Minimaldurchmesser ist etwa 10 nm, noch bevorzugter etwa 50 nm, ganz besonders bevorzugt etwa 100 nm. Durchmesserbereiche, die sich durch Kombination dieser maximalen Durchmesser und Minimaldurchmesser ergeben, sind besonders bevorzugt. Bevorzugt und deutlicher verstärkend wirken sich jedoch die globulären, inerten Stoffe (Kugelform) aus. Auch Core-Shell-Partikel, bevorzugt in Kugelform, können als Füllstoffe verwendet werden.

Bevorzugte Füllstoffe sind ausgewählt aus der Gruppe bestehend aus Zement, Kieselsäure, Quarz, Quarzsand, Quarzmehl, und Mischungen aus zwei oder mehreren davon. Für die Reaktivharzkomponente (A) besonders bevorzugt sind Füllstoffe ausgewählt aus der Gruppe bestehend aus Zement, pyrogener Kieselsäure, insbesondere unbehandelter, polarer pyrogener Kieselsäure, Quarzsand, Quarzmehl, und Mischungen aus zwei oder mehreren davon. Ganz besonders bevorzugt ist für die Reaktivharzkomponente (A) eine Mischung aus Zement (insbesondere Aluminatzement (oft auch als Tonerdezement bezeichnet) oder Portlandzement), pyrogener Kieselsäure und Quarzsand. Für die Härterkomponente (B) ist pyrogene Kieselsäure als alleiniger Füllstoff oder als einer von mehreren Füllstoffen bevorzugt; besonders bevorzugt sind neben der pyrogenen Kieselsäure noch einer oder mehrere weitere Füllstoffe vorhanden.

Als Additive in der Reaktivharzkomponente (A) finden übliche Additive Verwendung, also Thixotropiermittel, wie gegebenenfalls organisch oder anorganisch nachbehandelte pyrogene Kieselsäure (falls sie nicht schon als Füllstoff verwendet wird), insbesondere apolar nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Antistatikmittel, Verdickungsmittel, Flexibilisatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon. Auch nicht reaktive Verdünnungsmittel (Lösungsmittel) können, vorzugsweise in einer Menge bis zu 30 Gew.-%, bezogen auf die Gesamtmenge der Reaktivharzkomponente enthalten sein, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktivharzkomponente enthalten sein. Bevorzugt ist mindestens ein Thixotropiermittel als Additiv vorhanden, besonders bevorzugt eine organisch oder anorganisch nachbehandelte pyrogene Kieselsäure, ganz besonders bevorzugt eine apolar nachbehandelte pyrogene Kieselsäure, z.B. mit Polydimethylsiloxan (PDMS) nachbehandelte pyrogene Kieselsäure, insbesondere bevorzugt die in den Beispielen verwendete apolar nachbehandelte pyrogene Kieselsäure.

In dieser Hinsicht wird Bezug genommen auf die Anmeldungen WO 02/079341 und WO 02/079293 sowie WO 2011/128061 A1, deren diesbezüglicher Inhalt hiermit in diese Anmeldung aufgenommen wird.

In einer Ausführungsform kann die Reaktivharzkomponente zusätzlich einen Haftvermittler enthalten. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung einer Zweikomponenten-Dübelmasse z.B. in mit einem Diamantbohrer gebohrten Bohrlöchern von Bedeutung und erhöht die Versagensverbundspannung. Geeignete Haftvermittler sind aus der Gruppe der Silane, die mit weiteren reaktiven organischen Gruppen funktionalisiert sind und in das Polymernetzwerk eingebunden werden können, ausgewählt. Diese Gruppe umfasst z.B. 3-(Meth)acryloyloxypropyltrimethoxysilan, 3-(Meth)acryloyloxypropyltriethoxysilan, 3-(Meth)acryloyloxymethyltrimethoxysilan, 3-(Meth)acryloyloxymethyltriethoxysilan, Vinyltrimethoxysilan, Vinyltriethoxysilan, funktionalisiertes Tetraethoxysilan, funktionalisiertes Tetramethoxysilan, funktionalisiertes Tetrapropoxysilan, funktionalisiertes Ethyl- oder Propylpolysilikat, und Gemische von zwei oder mehr davon. In dieser Hinsicht wird Bezug genommen auf die Anmeldung DE 10 2009 059210, deren diesbezüglicher Inhalt hiermit in diese Anmeldung aufgenommen wird.

Der Haftvermittler ist zweckmäßig in Mengen von etwa 1 bis etwa 10 Gew.-% bezogen auf das Gesamtgewicht der Reaktivharzkomponente (A) enthalten.

Die vorliegende Erfindung betrifft auch ein Reaktivharz-System. Das erfindungsgemäße Reaktivharz-System ist ein Zwei- oder Mehrkomponenten-System, bevorzugt ein Zweikomponenten-System. Eine der Komponenten ist die erfindungsgemäße Reaktivharzkomponente (A), die andere eine Härterkomponente (B). Letztere enthält einen Initiator, mit dem bei Vermischen der Komponenten die Polymerisation des Reaktivharzes in Gang gesetzt wird.

Bei einer bevorzugten Ausführungsform des erfindungsgemäßen Reaktivharz-Systems ist das Reaktivharz-System ein Zweikomponenten-System und enthält die Reaktivharzkomponente (A) neben dem erfindungsgemäßen Reaktivharz zusätzlich noch eine hydraulisch abbindende oder polykondensierbare anorganische Verbindung, insbesondere Zement, und die Härterkomponente (B) neben dem Initiator für die Polymerisation des Reaktivharzes noch Wasser. Derartige Hybridmörtelsysteme sind ausführlich in DE 4231161 A1 beschrieben. Dabei enthält die Komponente (A) vorzugsweise als hydraulisch abbindende oder polykondensierbare anorganische Verbindung Zement, beispielsweise Portlandzement oder Tonerdezement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden. Die Komponente (A) kann als polykondensierbare anorganische Verbindung auch silikatische, polykondensierbare Verbindungen, insbesondere lösliches, gelöstes und/oder amorphes Siliziumdioxid enthaltende Stoffe wie z.B. polare, nicht nachbehandelte pyrogene Kieselsäure umfassen.

Des Weiteren ist es bevorzugt, dass die Komponente (A) auch ein Thixotropiermittel enthält, vorzugsweise apolar nachbehandelte pyrogene Kieselsäure, besonders bevorzugt mit Polydimethylsiloxan (PDMS) nachbehandelte pyrogene Kieselsäure, ganz besonders bevorzugt die in den Beispielen verwendete apolar nachbehandelte pyrogene Kieselsäure.

Die erfindungsgemäße Reaktivharzkomponente (A) enthält:
- das wie oben definierte erfindungsgemäße Reaktivharz, bevorzugt eine wie oben beschriebene bevorzugte Ausführungsform davon;
- mindestens eine hydraulisch abbindende oder polykondensierbare anorganische Verbindung, bevorzugt Zement;
- mindestens einen weiteren Füllstoff, bevorzugt Quarzsand; und
- mindestens ein Thixotropiermittel, bevorzugt apolar nachbehandelte pyrogene Kieselsäure.

In einer bevorzugten Ausführungsform enthält die Reaktivharzkomponente (A):
- mindestens einen Beschleuniger mit hoher Reaktivität;
- mindestens einen Beschleuniger mit niedriger Reaktivität;
- mindestens ein wie oben definiertes Backbone-Harz, bevorzugt Urethan(meth)acyat;
- mindestens einen Reaktivverdünner, bevorzugt HPMA und/oder BDDMA;
- mindestens einen wie oben definierten Inhibitor, bevorzugt einen Inhibitor vom Typ Piperidinyl-*N*-oxyl oder Tetrahydropyrrol-*N*-oxyl, bevorzugt TEMPOL;
- mindestens eine hydraulisch abbindende oder polykondensierbare anorganische Verbindung, bevorzugt Zement;
- optional mindestens einen weiteren Füllstoff, bevorzugt Quarzsand; und
- mindestens ein Thixotropiermittel, bevorzugt apolar nachbehandelte pyrogene Kieselsäure.

In einer noch bevorzugteren Ausführungsform enthält die Reaktivharzkomponente (A):
- mindestens einen Beschleuniger mit hoher Reaktivität;
- mindestens einen Beschleuniger mit niedriger Reaktivität;
- mindestens ein wie oben definiertes Urethan(meth)acyat;
- HPMA und/oder BDDMA;
- mindestens einen wie oben definierten Inhibitor vom Typ Piperidinyl-*N*-oxyl oder Tetrahydropyrrol-*N*-oxyl, bevorzugt TEMPOL;
- mindestens einen weiteren Inhibitor, der ausgewählt ist aus der Gruppe besteht aus Catecholen und Phenothiazinen;
- Zement; und
- mindestens ein Thixotropiermittel, bevorzugt apolar nachbehandelte pyrogene Kieselsäure.

In einer noch bevorzugteren Ausführungsform enthält die Reaktivharzkomponente (A):
- mindestens einen Beschleuniger mit hoher Reaktivität;
- mindestens einen Beschleuniger mit niedriger Reaktivität;
- mindestens ein wie oben definiertes Urethan(meth)acyat;
- HPMA und/oder BDDMA;
- TEMPOL;
- mindestens einen weiteren Inhibitor, der ausgewählt ist aus der Gruppe besteht aus Catecholen und Phenothiazinen;
- Zement;
- apolar nachbehandelte pyrogene Kieselsäure; und
- Quarzsand.

Die für ein erfindungsgemäßes Reaktivharz-System neben der Reaktivharzkomponente (A) erforderliche Härterkomponente (B) enthält typischerweise:
- mindestens einen Initiator für die Initiierung der Polymerisation des Reaktivharzes, bevorzugt Benzoylperoxid (BPO) oder tert-Butylperoxybenzoat; und
- Wasser.

In einer bevorzugten Ausführungsform enthält die Härterkomponente (B):
- mindestens einen Initiator für die Initiierung der Polymerisation des Reaktivharzes, bevorzugt Benzoylperoxid (BPO) oder tert-Butylperoxybenzoat;
- mindestens einen Füllstoff, bevorzugt pyrogene Kieselsäure; und
- Wasser.

In einer bevorzugteren Ausführungsform enthält die Härterkomponente (B):
- Benzoylperoxid (BPO) oder tert-Butylperoxybenzoat für die Initiierung der Polymerisation des Reaktivharzes;
- pyrogene Kieselsäure; und
- Wasser.

Die Reaktivharzkomponenten (A) und die Härterkomponenten (B) in jeder dieser Ausführungsformen sind beliebig miteinander kombinierbar.

In einer besonders bevorzugten Ausführungsform sind die Bestandteile des erfindungsgemäßen Reaktivharzes bzw. der erfindungsgemäßen Reaktivharzkomponente eines oder mehrere der Bestandteile, welche in den erfindungsgemäßen Beispielen genannt werden. Ganz besonders bevorzugt sind Reaktivharze bzw. Reaktivharzkomponenten, welche dieselben Bestandteile enthalten oder aus denselben Bestandteilen bestehen, wie sie in den einzelnen erfindungsgemäßen Beispielen genannt werden, und zwar bevorzugt in etwa in den dort genannten Anteilen.

Die erfindungsgemäßen Reaktivharze sind in vielen Bereichen, bei denen sonst üblicherweise ungesättigte Polyesterharze, Vinylesterharze oder Vinylesterurethanharze Verwendung finden, einsetzbar. Sie können insbesondere zur Herstellung von Reaktivharzmörteln für bauliche Anwendungen, wie die chemische Befestigung verwendet werden.

Das erfindungsgemäße Reaktivharz findet üblicherweise Verwendung als Harzbestandteil in der Reaktivharzkomponente eines Mehrkomponenten-Systems, typischerweise einem Zweikomponenten-System aus einer Reaktivharzkomponente (A) und einer Härterkomponente (B). Dieses Mehrkomponenten-System kann in Form eines Patronen-Systems, eines Kartuschen-Systems oder eines Folienbeutel-Systems vorliegen. Bei der bestimmungsgemäßen Verwendung des Systems werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen, in das mit dem aushärtenden Reaktivharz beschickte Bohrloch eingebracht und entsprechend justiert werden.

Ein solches Reaktivharz-System findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eignet es sich zur chemischen Befestigung von Verankerungsmitteln, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen.

Ein weiterer Gegenstand der Erfindung ist die Verwendung des erfindungsgemäßen Reaktivharzes und/oder eines Reaktivharz-Systems als Bestandteil eines aushärtbaren Bindemittels oder als aushärtbares Bindemittel, insbesondere zur Befestigung von Verankerungsmitteln in Bohrlöchern verschiedenen Untergrunds und zum baulichen Kleben. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen. Bevorzugt hat das Stahl-Bohrloch Rillen.

Ein weiterer Gegenstand der Erfindung ist die Verwendung einer Kombination von mindestens einem Beschleuniger mit hoher Reaktivität und mindestens einem Beschleuniger mit niedriger Reaktivität in einem Reaktivharz-System zum Einstellen der Verarbeitungszeit. In der Kombination beträgt das molare Verhältnis des mindestens einen Beschleunigers mit hoher Reaktivität zu dem mindestens einen Beschleunigers mit niedriger Reaktivität von 1,0:1,0 bis 1,0:1,6, vorzugsweise von 1,0:1,1 bis 1,0:1,6. Besonders bevorzugt beträgt das molare Verhältnis des mindestens einen Beschleunigers mit hoher Reaktivität zu dem mindestens einen Beschleunigers mit niedriger Reaktivität von 1,0:1,0 bis 1,0:1,4, insbesondere von 1,0:1,1 bis 1,0:1,4.

Ein weiterer Gegenstand der Erfindung ist die Verwendung von mindestens einem Beschleuniger mit hoher Reaktivität in einem Reaktivharz-System enthaltend mindestens einen Beschleuniger mit niedriger Reaktivität zum Einstellen der Verarbeitungszeit.

Ein weiterer Gegenstand der Erfindung ist die Verwendung von mindestens einem Beschleuniger mit niedriger Reaktivität in einem Reaktivharz-System enthaltend mindestens einen Beschleuniger mit hoher Reaktivität zum Einstellen der Verarbeitungszeit.

Ein weiterer Gegenstand der Erfindung ist eine Beschleuniger-Zusammensetzung für ein Reaktivharz-System umfassend mindestens einen Beschleuniger mit hoher Reaktivität und mindestens einen Beschleuniger mit niedriger Reaktivität. In der Beschleuniger-Zusammensetzung beträgt das molare Verhältnis des mindestens einen Beschleunigers mit hoher Reaktivität zu dem mindestens einen Beschleunigers mit niedriger Reaktivität von 1,0:1,0 bis 1,0:1,6, vorzugsweise von 1,0:1,1 bis 1,0:1,6. Besonders bevorzugt beträgt das molare Verhältnis des mindestens einen Beschleunigers mit hoher Reaktivität zu dem mindestens einen Beschleunigers mit niedriger Reaktivität von 1,0:1,0 bis 1,0:1,4, insbesondere von 1,0:1,1 bis 1,0:1,4.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

### BEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %- und ppm-Angaben beziehen sich auf das Gesamtgewicht der beschriebenen Zusammensetzung als Kalkulationsbasis, soweit nicht anders angegeben.

### Herstellungsbeispiel 1: Herstellung von Beschleunigern mit Methacrylatfunktion

### Aus primären Anilinen und monomerem Bisphenol-A-diglycidylether:

1 Äq. Bisphenol-A-diglycidylether ((BADGE) Epilox® A 19-03; Epoxyäquivalentgewicht 183 g/mol; LEUNA-Harze GmbH) wurde vollständig im Rundkolben vorgelegt, mit 0,5 Äq. eines primären Anilins, 1,1 Äq. Methacrylsäure ((MAA) BASF SE), 0,4 Gew.% Tetraethylammoniumbromid (Merck KGaA) sowie 230 ppm Tempol (Evonik Industries AG) und 160 ppm Phenothiazin (Allessa GmbH) versetzt und auf 120 °C temperiert. Es wurde gerührt bis nach etwa 4h über Dünnschichtchromatographie vollständiger Umsatz angezeigt wurde.

Es wurde mit 20 Gew.% Hydroxypropylmethacrylat (HPMA, Evonik Industries AG) verdünnt, mit 400 ppm Tempol nachstabilisiert und abgekühlt.

Um die Viskosität zu erniedrigen, wurde bei der Verwendung von para-Toluidin als primärem Anilin vor Zugabe des Anilins der Diglycidylether partiell mit 0,5 Äq. Methacrylsäure bei 80°C 1h umgesetzt.

| **Eingesetztes primäres Anilin** | **Lieferant** | **Abkürzung für den resultierenden Beschleuniger** |
|---|---|---|
| *meta*-Toluidin | Alfa Aesar | mT-BADGE-MAA |
| *para*-Toluidin | Sigma-Aldrich Chemie GmbH | pT-BADGE-MAA |
| *para*-Bromanilin | TCI Deutschland GmbH | pBrA-BADGE-MAA |
| *para*-Chloranilin | TCI Deutschland GmbH | pCIA-BADGE-MAA |
| *meta*-Chloro-*para*-methylanilin | TCI Deutschland GmbH | 3Cl4MeA-BADGE-MAA |
| *para*-tert-Butylanilin | TCI Deutschland GmbH | ptBuA-BADGE-MAA |

### Aus sekundären Anilinen und monomerem Bisphenol-A-diglycidylether:

1 Äq. Bisphenol-A-diglycidylether (Epilox® A 19-03; Epoxyäquivalentgewicht 183 g/mol; LEUNA-Harze GmbH) wurde vollständig im Rundkolben vorgelegt, mit 1 Äq. eines sekundären Anilins, 1,1 Äq. Methacrylsäure (BASF SE), 0,4 Gew.% Tetraethylammoniumbromid (Merck KGaA) sowie 230 ppm Tempol (Evonik Industries AG) und 160 ppm Phenothiazin (Allessa GmbH) versetzt und auf 100 °C temperiert. Es wurde gerührt bis nach etwa 4h über Dünnschichtchromatographie (stationäre Phase: Kieselgelplatte ; Eluent : Petrolether:Ethylacetat 1:1) vollständiger Umsatz angezeigt wurde, also kein freies Amin mehr nachweisbar war.

Es wurde mit 20 Gew% HPMA (Evonik Industries AG) verdünnt, mit 400 ppm Tempol nachstabilisiert und abgekühlt.

### Aus sekundären Anilinen und polymerem Bisphenol-A-diglycidylether:

0,5 Äq. Bisphenol-A-diglycidylether (Epilox® A 19-03; Epoxyäquivalentgewicht 183 g/mol; LEUNA-Harze GmbH) und 0,4 Äq. Bisphenol-A-diglycidylether (Epilox® A 50-02; Epoxyäquivalentgewicht 485 g/mol; LEUNA-Harze GmbH) wurden vollständig im Rundkolben vorgelegt, mit 0,9 Äq. eines sekundären Anilins, 1 Äq. Methacrylsäure (BASF SE), 0,4 Gew.% Tetraethylammoniumbromid (Merck KgaA) sowie 230 ppm Tempol (Evonik Industries AG) und 160 ppm Phenothiazin (Allessa GmbH) versetzt und auf 100 °C temperiert. Es wurde gerührt bis nach etwa 4h über Dünnschichtchromatographie vollständiger Umsatz angezeigt wurde.
Es wurde mit 20 Gew.% HPMA (Visiomer® HPMA 98, Evonik Industries AG) verdünnt, mit 400 ppm Tempol nachstabilisiert und abgekühlt.

| **Eingesetztes sekundäres Anilin** | **Lieferant** | **Abkürzung für den resultierenden Beschleuniger ("poly" steht für Beschleuniger, die mit polymerem Bisphenol-A-diglycidylether hergestellt wurden)** |
|---|---|---|
| N-Methyl-p-toluidin | TCI Deutschland GmbH | NMepT-BADGE-MAA bzw. polyNMepT-BADGE-MAA |
| N-Ethyl-p-toluidin | TCI Deutschland GmbH | NEtpT-BADGE-MAA bzw. polyNEtpT-BADGE-MAA |
| N-Ethyl-m-toluidin | TCI Deutschland GmbH | NEtmT-BADGE-MAA bzw. polyNEtmT-BADGE-MAA |
| N-Ethylanilin | TCI Deutschland GmbH | NEtA-BADGE-MAA |
| N-(2-Hydroxyethyl)anilin | TCI Deutschland GmbH | NHOEtA-BADGE-MAA |
| N-Dodecylanilin | TCI Deutschland GmbH | NdodecA-BADGE-MAA |
| N-Ethyl-*para*-chloroanilin | TCI Deutschland GmbH | NEtpCIA-BADGE-MAA |

### Herstellungsbeispiel 2: Herstellung von Beschleuniger ohne Methacrylatfunktion

1 Äq. eines primären Anilins (beispielsweise wie in Herstellungsbeispiel 1 aufgelistet) wird in 2,1 Äq. Glycidylether (TCl Deutschland GmbH) gelöst und mit 0,4 Gew.% Tetraethylammoniumbromid (Merck KgaA) versetzt. Man erhitzt auf 130°C und lässt 4h rühren.

### Herstellungsbeispiel 3: Herstellung eines Reaktivharzes

Ein Beschleuniger wie hierin definiert (beispielsweise ein gemäß Herstellungsbeispiel 1 oder Herstellungsbeispiel 2 hergestellter Beschleuniger) wurde in einer Menge entsprechend 7,8 mmol Amin/100g Harzmischung (c_{ges} = 7,8 mmol/100g Harz) mit 15,13 Gew.% HPMA (Visiomer® HPMA 98, Evonik Industries AG), 32,75 Gew.% 1,4-Butandioldimethacrylat (Visiomer® 1,4-BDDMA, Evonik Industries AG), 0,25 Gew.% TBC (tert-Butylbrenzcatechin, Rhodia), 0,015 Gew.% Tempol (Evonik Industries AG) und ad 100% (Menge wurde angepasst, so dass Summe aller Harzanteile 100% ergab) UMA/HPMA-Reaktivharz-Masterbatch (Urethanmethacrylatharz in 35 Gew.% HPMA hergestellt gemäß EP 0 713 015 A1, Beispiel A3) kombiniert.

### Testbeispiel 1: Gelzeit und maximale Reaktivitätstemperatur

Die **Gelzeit** wurde wie folgt ermittelt:
Gemessen wurde die Gelzeit (für das Reaktivharz mit t_{hg25°c} bezeichnet) ausgedrückt als die Zeitspanne gemessen vom Zeitpunkt der Zugabe eines Initiators zur Initialisierung der Härtung an bis zu dem Zeitpunkt, bei dem die Zusammensetzung eine Temperatur von 50°C erreicht hat. Die Messung erfolgte wie folgt:
Die Gelzeit nach Zugabe des Initiators (Perkadox® 20S (Akzo), Gewichtsverhältnis Reaktivharz:lnitiator 100:30) zum gemäß Herstellungsbeispiel 3 hergestellten Reaktivharz wurde mit einem herkömmlichen Gerät (Geltimer, Fa. WKS Informatik) bei einer Starttemperatur von 25°C bestimmt. Die Mischung wurde hierzu nach Zugabe des Initiators bis zu einer Höhe von 4 cm unterhalb des Randes in ein Teströhrchen gefüllt, wobei das Teströhrchen bei einer Temperatur von 25°C gehalten wurde (DIN 16945, DIN EN ISO 9396). Ein Glasstab oder eine Spindel wurde mit 10 Hüben pro Minuten in der Mischung auf und ab bewegt. Die Gelzeit entspricht der Zeitspanne nach Zugabe des Initiators, nach der eine Temperatur von 50°C in der Mischung gemessen wurde.

Die **maximale Reaktivitätstemperatur Tₘₐₓ** entspricht dem Maximum der Temperaturkurve in der Gelzeitmessung. Um dieses Maximum zu ermitteln, wurde die Gelzeitmessung nach Erreichen der Temperatur von 50°C solange fortgeführt, bis das Maxium der Temperaturkurve überschritten war.

Die Ergebnisse sind in der folgenden Tabelle wiedergegeben:

| **Beschleuniger aus Amin** | **Gelzeit: t_{hg,25°c}** | **Maximale Reaktivitätstemperatur: Tₘₐₓ** |
|---|---|---|
| NMepT-BADGE-MAA | 2,40 min | 168°C |
| NEtpT-BADGE-MAA | 3,70 min | 162°C |
| NEtmT-BADGE-MAA | 9 min | 164°C |
| mT-BADGE-MAA | 21 min | 162°C |
| pT-BADGE-MAA | 5,4 min | 163°C |
| NEtA-BADGE-MAA | 22 min | 162°C |
| NHOEtA-BADGE-MAA | 33 min | 159°C |
| pBrA-BADGE-MAA | 100 min | 156°C |
| ptBuA-BADGE-MAA | 11 min | 157°C |
| NdodecA-BADGE-MAA | 20 min | 158°C |
| pCIA-BADGE-MAA | 72min | 155°C |
| 3Cl4MeA-BADGE-MAA | 36min | 155°C |
| NEtpCI-BADGE-MAA | 42min | 158°C |
| polyNMepT-BADGE-MAA | 2,30 min | 157°C |
| polyNEtpT-BADGE-MAA | 3,60 min | 161°C |
| polyNEtmT-BADGE-MAA | 9 min | 162°C |
| pCIA-tBuGE | 50 min | 160°C |
| pCIA-EtGE | 60 min | 157°C |
| pBrA-tBuGE | 52 min | 156°C |
| 4-Brom-N,N-diethylanilin | 37 min | 156°C |

### Herstellungsbeispiel 4: Herstellung eines Reaktivharzes mit Beschleuniger-Kombination

Beschleuniger (Konzentration bezogen auf Amin; in mmol Amin/100g Harzmischung), TBC (tert-Butylbrenzcatechin, Rhodia) und BC (Brenzcatechin, Rhodia) wurden in einer Menge entsprechend der folgenden Tabelle in 40,12 Gew.% 1,4-Butandioldimethacrylat (Visiomer® 1,4-BDDMA, Evonik Industries AG), 0,015 Gew.% Tempol (Evonik Industries AG) und ad100% (Menge angepasst, so dass Summe aller Harzanteile 100% ergibt) UMA/HPMA-Reaktivharz-Masterbatch (Urethanmethacrylatharz in 35 Gew.% HPMA hergestellt analog EP 0 713 015 A1) aufgenommen.

| | **Ref-Bsp** | **Bsp1** | **Bsp2** | **Bsp3** | **Bsp4** | **Bsp5** | **Bsp6** | **Bsp7** |
|---|---|---|---|---|---|---|---|---|
| TBC [Gew.%] | 0,098 | 0,07 | 0,08 | 0,07 | 0,082 | 0,082 | 0,082 | 0,059 |
| BC [Gew.%] | 0,392 | 0,28 | 0,29 | 0,27 | 0,295 | 0,295 | 0,295 | 0,263 |
| DiPpT [mmol/100g Harz] | 6,9 | - | 1,9 | 3,325 | 3,325 | 3,325 | 3,325 | 3,325 |
| DHEmT (Dihydroxyethyl-m-toluidin, Saltigo) [mmol/100g Harz] | 2 | - | 2,85 | - | - | - | - | - |
| NEtpT-BADGE-MAA [mmol/100g] | - | 1,9 | - | - | - | - | - | - |
| NEtmT-BADGE-MAA [mmol/100g] | - | 2,85 | - | - | - | - | - | - |
| pCIA-BADGE-MAA [mmol/100g] | - | 4,75 | 4,75 | 4,75 | - | - | - | - |
| pCIA-tBuGE [mmol/100g] | - | - | - | - | 4,75 | - | - | - |
| pCIA-EtGE [mmol/100g] | - | - | - | - | - | 4,75 | - | - |
| pBrA-tBuGE [mmol/100g] | - | - | - | - | - | - | 4,75 | - |
| 4-Brom-N,N-diethylanilin [mmol/100g] | - | - | - | - | - | - | - | 4,75 |

### Herstellungsbeispiel 5: Reaktivharzkomponente (A)

In 34,5 Gew.% eines in Herstellungsbeispiel 4 hergestellten Reaktivharzes wurden in einem Dissolver unter Vakuum 44,2 Gew.% Quarzsand F32 (Quarzwerke Frechen), 18,5 Gew.% Aluminatzement Secar® 80 (Kerneos), 1 Gew.% pyrogene Kieselsäure CAB-O-SIL® 720 (Cabot Rheinfelden) und 1,8 Gew.% pyrogene Kieselsäure Aerosil® R 812 (Evonik Industries AG) dispergiert.

### Testbeispiel 2: Messung der Verbundspannung

Ein Reaktivharzsystem aus einer gemäß Herstellungsbeispiel 5 hergestellten Reaktivharzkomponente (A) und der als Härterkomponente (B) eingesetzten kommerziellen Härterkomponente HY-200 B (Hilti) wurde in eine Plastikkartusche (Firma Ritter GmbH; Volumenverhältnis A:B = 5:1) mit den Innendurchmessern 32,5 mm (Komponente (A)) bzw. 14 mm (Komponente (B)) gefüllt und wie folgt getestet:
Zur Bestimmung der mit Reaktivharzsystemen gemäß dem Vergleichsbeispiel1 und gemäß Beispiel1 bis Beispiel4 erzielten Scherfestigkeit (Synonym: Verbundspannung) wurde das gemischte Reaktivharzsystem (also die Mischung aus Reaktivharzkomponente (A) und Härterkomponente (B) im Volumenverhältnis A:B = 5:1) in eine Stahlhülse mit definierter Geometrie und definierter Füllhöhe des Mörtels (Einbindetiefe) eingebracht. Anschließend wurde eine Ankerstange mittels einer Zentrierhilfe mittig in der mit Mörtel gefüllten Stahlhülse platziert. Nach Aushärtung des Mörtels bei 25°C bzw. 40°C und für mindestens 12 Stunden wurde die Probe mit Hilfe eines Gewindeadapters in eine Zugprüfmaschine eingeschraubt (Fabrikat: Zwick Roell Z050, 50 kN). Die Probe wurde mit Zugkraft bei definierter Geschwindigkeit bis zum Versagen belastet. Die entsprechende Kraft-Weg-Abhängigkeit wurde kontinuierlich registriert. Es wurden jeweils fünf Einzelmessungen durchgeführt und der Mittelwert der maximalen Kraft beim Versagen berechnet.

Zur Durchführung der Messungen wurden Ankerstangen mit Gewinde M8 und Stahlhülsen mit folgender Geometrie verwendet:

| | |
|---|---|
| Hinterschnitttiefe: | 0,35+/-0,02 mm |
| Hinterschnittbreite: | 2 mm |
| Einbindetiefe: | 36 mm |
| Innendurchmesser: | 12 mm |

Die aus diesen Messungen ermittelte Scherfestigkeit ist definiert als der Quotient aus maximaler Kraft beim Versagen und der Scherfläche der verwendeten Ankerstange (Ankerstange M8: 904,3 mm²).

Außerdem wurde die Mörtelreaktivität tₘ,₂₅→50°C bestimmt. Gemessen wurde die Reaktivitätsdauer. Darunter versteht man die Zeitspanne gemessen vom Zeitpunkt der Zugabe eines Initiators zur Initialisierung der Härtung an bis zu dem Zeitpunkt, bei dem die Zusammensetzung eine Temperatur von 50°C erreicht hat. Die Messung erfolgte wie folgt:
Die Mörtelreaktivität tₘ,₂₅→50°C nach Zugabe der als Härterkomponente (B) eingesetzten kommerziellen Härterkomponente HY-200 B (Hilti), enthaltend einen Initiator, zur Harzkomponente (A) im Volumenverhältnis A:B = 5:1 wurde mit einem herkömmlichen Gerät (Geltimer, Fa. WKS Informatik) bei einer Starttemperatur von 25°C bestimmt. Die Mischung wurde hierzu nach Zugabe der initiatorhaltigen Härterkomponente bis zu einer Höhe von 4 cm unterhalb des Randes in ein Teströhrchen gefüllt, wobei das Teströhrchen bei einer Temperatur von 25°C gehalten wurde (DIN 16945, DIN EN ISO 9396). Ein Glasstab oder eine Spindel wurde mit 10 Hüben pro Minuten in der Mischung auf und ab bewegt. Die Mörtelreaktivität entspricht der Zeitspanne nach Zugabe der initiatorhaltigen Härterkomponente, nach der eine Temperatur von 50°C in der Mischung gemessen wurde.

Die Ergebnisse der Messungen sind in der folgenden Tabelle wiedergegeben:

| | **Ref-Bsp** | **Bsp1** | **Bsp2** | **Bsp3** | **Bsp4** | **Bsp5** | **Bsp6** | **Bsp7** |
|---|---|---|---|---|---|---|---|---|
| Verbundspannung [N/mm²] bei 25°C | 30,2 | 29,1 | 27,3 | 29,4 | 31,5 | 31,5 | 31,4 | 31,3 |
| | ±4,3 | ±3,6 | ±1,7 | ±1,5 | ±5,2 | ±3,2 | ±3,1 | ±3,3 |
| Verbundspannung [N/mm²] bei 40°C | 2,9 | 23,2 | 23,7 | 25,1 | 29,7 | 32,0 | 30,9 | 28,9 |
| | ±2,9 | ±1 | ±1,5 | ±1,6 | ±1,2 | ±3,9 | ±2,9 | 3,1 |
| Mörtelreaktivität [min]: t_{m,25}→50°C | 22,2 | 21,9 | 18,5 | 21,2 | 18,4 | 20,9 | 21,3 | 19,1 |

### Folgerung:

Bei diesen Tests wurden Mischungen aus Beschleunigern eingesetzt. Die verwendeten Beschleuniger waren entweder Beschleuniger mit niedriger Reaktivität oder Beschleuniger mit hoher Reaktivität. Als Beschleuniger mit niedriger Reaktivität werden hier Beschleuniger bezeichnet, welche als einziger Beschleuniger im Reaktivharz im Testbeispiel 1 eine Gelzeit von 40 Minuten bis 200 Minuten zeigten, während als Beschleuniger mit hoher Reaktivität Beschleuniger bezeichnet werden, welche als einziger Beschleuniger im Reaktivharz im Testbeispiel 1 eine Gelzeit von 2 bis 40 Minuten zeigten.

Die Beispiele zeigen, dass chemische Dübel mit hoher Verbundspannung sowohl bei 25°C als auch bei 40°C und einer Mörtelreaktivität von etwa 20 Minuten durch eine Kombination von Beschleunigern mit hoher und niedriger Reaktivität herstellbar sind, während die Verwendung einer Kombination aus Beschleunigern mit hoher Reaktivität (Vergleichsbeispiel 1, Mischung aus DiPpT und DHEmT) zu einer unbefriedigenden Verbundspannung bei 40°C führt.

## Patentansprüche

1. Reaktivharz, enthaltend:
(1) mindestens einen Beschleuniger mit hoher Reaktivität; und
(2) mindestens einen Beschleuniger mit niedriger Reaktivität; wobei ein Beschleuniger mit hoher Reaktivität **dadurch gekennzeichnet ist, dass** ein Reaktivharz eine Gelzeit gemäß Testbeispiel 1 von 2 Minuten bis 40 Minuten aufweist, wenn es als einzigen Beschleuniger den Beschleuniger mit hoher Reaktivität enthält;
ein Beschleuniger mit niedriger Reaktivität **dadurch gekennzeichnet ist, dass** ein Reaktivharz eine Gelzeit gemäß Testbeispiel 1 von 40 Minuten bis 200 Minuten aufweist, wenn es als einzigen Beschleuniger den Beschleuniger mit niedriger Reaktivität enthält; und wobei
das molare Verhältnis des mindestens einen Beschleunigers mit hoher Reaktivität zu dem mindestens einen Beschleunigers mit niedriger Reaktivität von 1,0:1,0 bis 1,0:1,6, vorzugsweise von 1,0:1,1 bis 1,0:1,6 beträgt.

2. Reaktivharz gemäß Anspruch 1, wobei das molare Verhältnis des mindestens einen Beschleunigers mit hoher Reaktivität zu dem mindestens einen Beschleunigers mit niedriger Reaktivität von 1,0:1,0 bis 1,0:1,4, vorzugsweise von 1,0:1,1 bis 1,0:1,4 beträgt.

3. Reaktivharz gemäß Anspruch 1 oder 2, wobei der mindestens eine Beschleuniger mit hoher Reaktivität und/oder der mindestens eine Beschleuniger mit niedriger Reaktivität kovalent in das Harz eingebaut sind.

4. Reaktivharzkomponente (A) für ein Reaktivharz-System, enthaltend ein Reaktivharz gemäß irgendeinem der Ansprüche 1 bis 3.

5. Reaktivharz-System mit einer Reaktivharzkomponente (A) gemäß Anspruch 4, und einer Härterkomponente (B), die einen Initiator enthält.

6. Reaktivharz-System gemäß Anspruch 5, wobei mindestens eine der Komponenten (A) oder (B) einen anorganischen Füllstoff enthält.

7. Reaktivharz-System gemäß irgendeinem der Ansprüche 4 bis 6, wobei die Reaktivharzkomponente (A) enthält:
- mindestens einen Beschleuniger mit hoher Reaktivität;
- mindestens einen Beschleuniger mit niedriger Reaktivität;
- mindestens ein Backbone-Harz;
- mindestens einen Reaktivverdünner;
- mindestens einen Inhibitor;
- mindestens eine hydraulisch abbindende oder polykondensierbare anorganische Verbindung; und
- mindestens ein Thixotropiermittel,
und die Härterkomponente (B) enthält:
- mindestens einen Initiator für die Initiierung der Polymerisation des Reaktivharzes;
- mindestens einen Füllstoff; und
- Wasser.

8. Verwendung eines Reaktivharzes gemäß irgendeinem der Ansprüche 1 bis 3 und/oder eines Reaktivharz-Systems gemäß irgendeinem der Ansprüche 5 bis 7 zur chemischen Befestigung von Verankerungsmitteln in Bohrlöchern oder zum baulichen Kleben.

9. Verwendung einer Kombination von mindestens einem Beschleuniger mit hoher Reaktivität und mindestens einem Beschleuniger mit niedriger Reaktivität in einem Reaktivharz-System zum Einstellen der Verarbeitungszeit, wobei ein Beschleuniger mit hoher Reaktivität **dadurch gekennzeichnet ist, dass** ein Reaktivharz eine Gelzeit gemäß Testbeispiel 1 von 2 Minuten bis 40 Minuten aufweist, wenn es als einzigen Beschleuniger den Beschleuniger mit hoher Reaktivität enthält; und
ein Beschleuniger mit niedriger Reaktivität **dadurch gekennzeichnet ist, dass** ein Reaktivharz eine Gelzeit gemäß Testbeispiel 1 von 40 Minuten bis 200 Minuten aufweist, wenn es als einzigen Beschleuniger den Beschleuniger mit niedriger Reaktivität enthält; und wobei
das molare Verhältnis des mindestens einen Beschleunigers mit hoher Reaktivität zu dem mindestens einen Beschleunigers mit niedriger Reaktivität von 1,0:1,0 bis 1,0:1,6, vorzugsweise von 1,0:1,1 bis 1,0:1,6 beträgt.

10. Die Verwendung gemäß Anspruch 9, wobei das molare Verhältnis des mindestens einen Beschleunigers mit hoher Reaktivität zu dem mindestens einen Beschleunigers mit niedriger Reaktivität von 1,0:1,0 bis 1,0:1,4, vorzugsweise von 1,0:1,1 bis 1,0:1,4 beträgt.

11. Verwendung von mindestens einem Beschleuniger mit hoher Reaktivität in einem Reaktivharz-System enthaltend mindestens einen Beschleuniger mit niedriger Reaktivität zum Einstellen der Verarbeitungszeit, wobei
ein Beschleuniger mit hoher Reaktivität **dadurch gekennzeichnet ist, dass** ein Reaktivharz eine Gelzeit gemäß Testbeispiel 1 von 2 Minuten bis 40 Minuten aufweist, wenn es als einzigen Beschleuniger den Beschleuniger mit hoher Reaktivität enthält; und
ein Beschleuniger mit niedriger Reaktivität **dadurch gekennzeichnet ist, dass** ein Reaktivharz eine Gelzeit gemäß Testbeispiel 1 von 40 Minuten bis 200 Minuten aufweist, wenn es als einzigen Beschleuniger den Beschleuniger mit niedriger Reaktivität enthält; und wobei
das molare Verhältnis des mindestens einen Beschleunigers mit hoher Reaktivität zu dem mindestens einen Beschleunigers mit niedriger Reaktivität von 1,0:1,0 bis 1,0:1,6, vorzugsweise von 1,0:1,1 bis 1,0:1,6 beträgt.

12. Verwendung von mindestens einem Beschleuniger mit niedriger Reaktivität in einem Reaktivharz-System enthaltend mindestens einen Beschleuniger mit hoher Reaktivität zum Einstellen der Verarbeitungszeit, wobei ein Beschleuniger mit hoher Reaktivität **dadurch gekennzeichnet ist, dass** ein Reaktivharz eine Gelzeit gemäß Testbeispiel 1 von 2 Minuten bis 40 Minuten aufweist, wenn es als einzigen Beschleuniger den Beschleuniger mit hoher Reaktivität enthält; und
ein Beschleuniger mit niedriger Reaktivität **dadurch gekennzeichnet ist, dass** ein Reaktivharz eine Gelzeit gemäß Testbeispiel 1 von 40 Minuten bis 200 Minuten aufweist, wenn es als einzigen Beschleuniger den Beschleuniger mit niedriger Reaktivität enthält; und wobei
das molare Verhältnis des mindestens einen Beschleunigers mit hoher Reaktivität zu dem mindestens einen Beschleunigers mit niedriger Reaktivität von 1,0:1,0 bis 1,0:1,6, vorzugsweise von 1,0:1,1 bis 1,0:1,6 beträgt.

13. Beschleuniger-Zusammensetzung für ein Reaktivharz-System umfassend:
(1) mindestens einen Beschleuniger mit hoher Reaktivität; und
(2) mindestens einen Beschleuniger mit niedriger Reaktivität; wobei ein Beschleuniger mit hoher Reaktivität **dadurch gekennzeichnet ist, dass** ein Reaktivharz eine Gelzeit gemäß Testbeispiel 1 von 2 Minuten bis 40 Minuten aufweist, wenn es als einzigen Beschleuniger den Beschleuniger mit hoher Reaktivität enthält; und
ein Beschleuniger mit niedriger Reaktivität **dadurch gekennzeichnet ist, dass** ein Reaktivharz eine Gelzeit gemäß Testbeispiel 1 von 40 Minuten bis 200 Minuten aufweist, wenn es als einzigen Beschleuniger den Beschleuniger mit niedriger Reaktivität enthält; und wobei
das molare Verhältnis des mindestens einen Beschleunigers mit hoher Reaktivität zu dem mindestens einen Beschleunigers mit niedriger Reaktivität von 1,0:1,0 bis 1,0:1,6, vorzugsweise von 1,0:1,1 bis 1,0:1,6 beträgt.

14. Beschleuniger-Zusammensetzung für ein Reaktivharz-System gemäß Anspruch 13, wobei das molare Verhältnis des mindestens einen Beschleunigers mit hoher Reaktivität zu dem mindestens einen Beschleunigers mit niedriger Reaktivität von 1,0:1,0 bis 1,0:1,4, vorzugsweise von 1,0:1,1 bis 1,0:1,4 beträgt.
